# FASCICULE DE BREVET EUROPEEN

(11) **EP 1 791 625 B1**
(45) Date de publication et mention de la délivrance du brevet: **24.12.2008**
(21) Numéro de dépôt: 05805594.8
(22) Date de dépôt: 02.09.2005
(51) Int. Cl.: B01F 5/06

(54) **DISPOSITIF DE RECHAUFFAGE DE LAIT ET MACHINE A CAFE COMPRENANT UN TEL DISPOSITIF**
VORRICHTUNG ZUM ERWÄRMEN VON MILCH UND KAFFEEMASCHINE DAMIT
DEVICE FOR HEATING MILK AND COFFEE MACHINE COMPRISING SAME

(30) Priorité: 10.09.2004 FR 0409626
(43) Date de publication de la demande: 06.06.2007
(73) Titulaire: SEB S.A., 69130 Ecully (FR)
(72) Inventeur: TURPIN, Romain, F-14210 Sainte Honorine du Fay (FR); BAZIN, Nicolas, F-14200 Herouville Saint Clair (FR); MEYER, Pascal, F-14000 Caen (FR)
(74) Mandataire: Kiehl, Hubert
(86) Numéro de dépôt international: PCT/FR2005/002207
(87) Numéro de publication internationale: WO 2006/030098

(56) Documents cités:
- WO-A-20/04004523
- DE-C1- 19 719 784
- US-A- 2 652 234
- US-A- 5 473 972
- US-A- 5 611 262
- US-A- 5 738 002

## Description

La présente invention se rapporte à un dispositif de réchauffage de lait comprenant un corps comportant :
- un conduit d'injection de vapeur débouchant dans une chambre d'aspiration et destiné à être connecté à une source de vapeur ;
- un conduit de lait en communication avec la chambre d'aspiration et destiné à être relié à un récipient contenant du lait ; et
- une chambre de réchauffage s'étendant depuis une sortie de la chambre d'aspiration jusqu'à un orifice de sortie par lequel le lait réchauffé peut s'écouler en dehors dudit corps.

Un tel dispositif de réchauffage est connu du document DE-C1-197 19 784, dans lequel un élément mousseur est monté librement en rotation dans la chambre de réchauffage.

Dans le domaine des machines à café du type expresso, il est par ailleurs connu de monter un tel dispositif sur une buse de sortie de vapeur dans le but de, soit produire une émulsion de lait destinée à la préparation d'un cappuccino, soit produire du lait chaud s'il n'y a pas d'entrée d'air dans la chambre d'aspiration, afin de préparer du café au lait.

Par exemple, le document US-A-5 738 002 décrit un dispositif de production d'émulsion de lait dans lequel une chambre cylindrique en aval de la chambre d'aspiration, est conçue dans le but de favoriser l'émulsion du lait. On constate un réchauffement du lait à la sortie de cette chambre cylindrique du dispositif.

Toutefois, la température du lait mousseux ainsi produit reste généralement peu élevée, notamment si le lait aspiré était conservé dans un réfrigérateur. Dans le cas où le conduit d'air est obturé, la quantité de lait aspiré par rapport à la quantité de vapeur injectée est plus importante, et de ce fait, l'élévation de température du lait est encore moins importante que dans le cas d'une production d'un lait mousseux. Aussi, il peut arriver que le lait qui sort du dispositif de l'art antérieur soit à peine tiède s'il était préalablement conservé à basse température.

La présente invention a pour but de pallier cet inconvénient en proposant un dispositif de réchauffage de lait dans lequel le réchauffage du lait est amélioré, que le lait sortant soit sous forme de mousse ou de lait liquide.

A cet effet, la présente invention a pour objet un dispositif de réchauffage de lait du type précité, caractérisé en ce que le corps s'étend selon un axe central et comporte une extrémité supérieure dans laquelle débouche le conduit d'injection de vapeur, et une extrémité inférieure dans laquelle débouche l'orifice de sortie, ledit corps présentant une portion supérieure dans laquelle est agencée la chambre d'aspiration et une portion inférieure dans laquelle est agencée la chambre de réchauffage, et en ce que la chambre de réchauffage comporte un conduit interne ayant la forme d'une hélice régulière s'étendant selon l'axe central sur au moins deux spires.

Grâce à cette disposition du conduit en hélice, la longueur effective de la chambre de réchauffage est considérablement augmentée par rapport à une chambre de réchauffage globalement cylindrique. On obtient ainsi un contact prolongé du lait avec la vapeur, donc un meilleur échange thermique, et par conséquent, une température de sortie du lait plus élevée. On notera de plus que la forme en hélice du conduit permet d'augmenter sa longueur effective sans augmenter de manière excessive l'encombrement axial de la chambre.

Dans des modes de réalisation préférés de l'invention, on a recours, en outre, à l'une et/ou à l'autre des dispositions suivantes :
- la portion inférieure du corps présente une paroi interne globalement cylindrique, et le conduit de la chambre de réchauffage est délimité par la paroi interne du corps, un pion central et une aile hélicoïdale s'étendant entre ladite paroi interne et le pion, et est en communication avec l'orifice de sortie ;
- l'aile hélicoïdale présente une embase venue de matière avec le pion, et un bord radial libre opposé à ladite embase et pourvu d'un moyen d'étanchéité ;
- le pion est monté amovible dans le corps ;
- le pion présente une extrémité élargie qui forme l'extrémité inférieure du corps et dans laquelle l'orifice de sortie est agencé coaxialement à l'axe central ;
- les extrémités supérieure et inférieure du corps sont constituées respectivement par deux bouchons amovibles dont l'un comporte le conduit d'injection de vapeur, et dont l'autre porte le pion et l'aile hélicoïdale ;
- un conduit d'air en communication avec la chambre d'aspiration est prévu pour aspirer de l'air ambiant, ledit conduit d'air étant sélectivement obturable par une commande d'air.

Par ailleurs, l'invention à également pour objet une machine à café du type expresso comprenant un générateur de vapeur et un tube présentant une première extrémité reliée au générateur de vapeur et une deuxième extrémité formant une sortie de vapeur, caractérisée en ce qu'un dispositif de réchauffage de lait tel que défini précédemment est agencé à la deuxième extrémité du tube de sortie de vapeur.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe d'un dispositif de réchauffage de lait selon un premier mode de réalisation de l'invention, qui comporte une chambre de réchauffage ;
- la figure 2 est une vue en perspective éclatée d'un deuxième mode de réalisation ;
- la figure 3 est une vue en coupe de la chambre de réchauffage du deuxième mode de réalisation.

Sur les différentes figures, on a conservé des références identiques pour désigner des éléments identiques ou similaires.

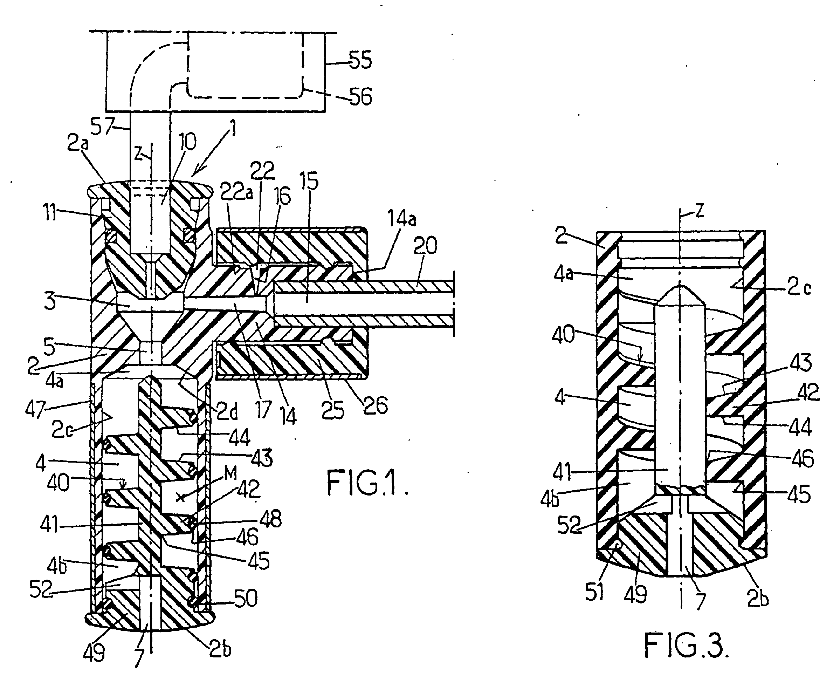

A la figure 1 est représenté un dispositif de réchauffage de lait 1 qui comporte un corps 2 s'étendant longitudinalement selon un axe central Z et globalement cylindrique. Le corps 2 comporte une chambre d'aspiration 3 et une chambre de réchauffage 4 coaxiales à l'axe central Z. La chambre d'aspiration 3 et la chambre de réchauffage 4 sont disposées consécutivement le long de l'axe central Z et communiquent entre elles par une sortie 5 de la chambre d'aspiration. L'extrémité 4b de la chambre de réchauffage 4, opposée à la sortie 5, communique avec un orifice de sortie 7.

Le dispositif 1 est destiné à être monté sur une machine à café de type expresso 55, partiellement et schématiquement représentée à la figure 1, qui comporte un générateur de vapeur 56 et un tube 57 qui forme une sortie de vapeur. Le tube 57 présente une première extrémité reliée au générateur de vapeur 56 et une deuxième extrémité sur laquelle le dispositif 1 est monté de manière à ce que la chambre d'aspiration 3 soit située au-dessus de la chambre de réchauffage 4, c'est-à-dire avec un axe central Z à peu près vertical, pour favoriser l'écoulement de la chambre d'aspiration 3 vers la chambre de réchauffage 4, puis vers l'orifice de sortie 7.

La portion inférieure du corps 2 présente une paroi interne cylindrique 2c, coaxiale à l'axe central Z, qui délimite la paroi radialement extérieure de la chambre de réchauffage 4.

Le corps 2 comprend un conduit d'injection de vapeur 10 s'étendant depuis une extrémité supérieure 2a du corps 2, jusqu'à la chambre d'aspiration 3. La portion supérieure du conduit d'injection de vapeur 10 présente un diamètre adapté pour insérer dans celle-ci l'extrémité du tube de sortie de vapeur 57 de la machine expresso 55, et une portion inférieure débouchant dans la chambre d'aspiration 3, qui présente un diamètre réduit et permet d'injecter de la vapeur selon l'axe central Z. Le conduit d'injection de vapeur 10 est formé dans un bouchon 11 inséré de manière amovible et étanche dans le corps 2, afin notamment de faciliter le nettoyage de la chambre d'aspiration 3.

Le corps 2 comporte un bras tubulaire 14 s'étendant radialement par rapport à l'axe central Z et formé en une seule pièce avec le corps. Le bras 14 comporte un conduit de lait 15, un conduit d'air 16 et un conduit d'alimentation 17 s'étendant jusqu'à la chambre d'aspiration 3.

Le conduit de lait 15 s'étend radialement depuis l'extrémité 14a du bras 14, et présente un diamètre intérieur adapté à recevoir par emmanchement une extrémité d'un tube 20, l'autre extrémité (non représentée) de ce tube étant plongée dans un récipient contenant du lait.

Le conduit d'air 16 s'étend perpendiculairement par rapport au conduit de lait 15 depuis un débouché 22 agencé dans une face extérieure du bras tubulaire 14. Le conduit d'air 16 permet d'aspirer de l'air ambiant grâce à une mise en communication sélective avec l'atmosphère.

Un organe de commande d'air 25 est monté rotatif autour du bras tubulaire 14. Cet organe de commande d'air 25 présente une face extérieure 26 adaptée à être manipulée avec les doigts et une face intérieure entourant la surface extérieure cylindrique du bras 14.

L'organe de commande d'air 25 est mobile entre au moins deux positions, à savoir une position dite cappuccino pour laquelle le conduit d'air 16 est en communication avec l'atmosphère, et une position dite lait chaud pour laquelle le conduit d'air 16 est obturé. En position cappuccino, de l'air et du lait sont aspirés simultanément dans la chambre d'aspiration 3. Il se forme alors dans celle-ci une émulsion de lait et d'air qui se présentera sous forme d'une mousse à la sortie du dispositif 1. En position lait chaud, uniquement du lait est aspiré dans la chambre d'aspiration 3 et du fait de la condensation de la vapeur au contact du lait à travers le dispositif, on obtient du lait liquide, pratiquement sans mousse, à la sortie du dispositif 1.

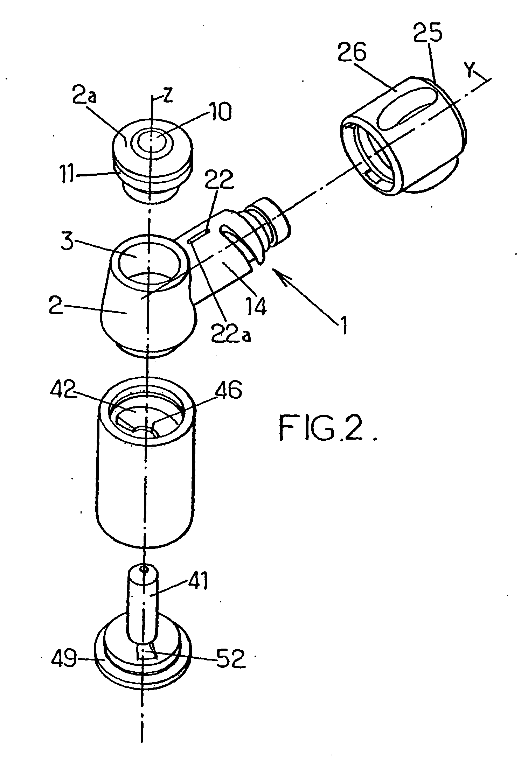

Dans les modes de réalisations représentés, le débouché 22 du conduit d'air 16, mieux visible à la figure 2, comprend une rainure 22a s'étendant selon l'axe longitudinal Y du bras tubulaire 14.

Le conduit d'alimentation 17 met en communication les conduits de lait (15) et d'air (16) avec la chambre d'aspiration 3 dans laquelle le lait et l'air sont aspirés par effet Venturi. Le conduit d'alimentation 17 débouche perpendiculairement au conduit d'injection de vapeur 10 de manière à favoriser l'aspiration du lait et de l'air, et à obtenir un mélange air-lait-vapeur.

Le mélange formé dans la chambre d'aspiration 3 est transféré par la sortie 5 formé dans la partie inférieure de celle-ci, vers la chambre de réchauffage 4, puis est évacué du dispositif 1 par l'orifice de sortie 7 à une extrémité inférieure 2b du corps 2.

Comme on peut le voir aux figures 1 et 3, la chambre de réchauffage 4 comporte un conduit interne 40 de forme hélicoïdale, c'est-à-dire qu'après une zone cylindrique de faible hauteur 4a qui s'étend depuis la paroi 2d du corps 2 délimitant l'extrémité longitudinale supérieure de la chambre de réchauffage 4 et dans laquelle débouche la sortie 5 (voir figure 1), la chambre de réchauffage 4 présente une section transversale qui évolue selon une hélice jusqu'à l'extrémité longitudinale inférieure 4b de la chambre.

Dans les modes de réalisation représentés aux figures 1 et 3, le conduit hélicoïdal 40 est coaxial à l'axe central Z et présente un pas et un rayon constants, de manière à ce qu'il occupe le plus d'espace possible dans le corps 2. De même, la section transversale du conduit 40 est constante le long de l'hélice et présente une forme sensiblement carrée. L'aire de cette section transversale du conduit 40 est nettement supérieure à la section de la sortie 5 de la chambre d'aspiration 3, notamment pour favoriser les turbulences, mais reste nettement inférieure à l'aire de la section circulaire interne de la portion du corps 2 qui délimite la paroi radialement extérieure 2c de la chambre de réchauffage 4. On considère qu'une section transversale du conduit hélicoïdal 40 comprise entre 3 et 10 fois la section transversale de l'ouverture 5 permet d'obtenir un bon compromis entre le réchauffage du lait et la formation de mousse.

Dans les modes de réalisation représentés, le conduit hélicoïdal 40 s'étend sur environ 4 tours, mais une hélice s'étendant sur 2 tours présente déjà une longueur effective très nettement supérieure à la longueur d'une chambre de réchauffage cylindrique s'étendant selon l'axe central, pour un encombrement comparable. La longueur effective correspond à la distance décrite par le milieu M d'une section transversale du conduit interne 40 lorsque ce point M évolue le long de ce conduit 40.

Un pion 41 est agencé à l'intérieur de la portion inférieure du corps 2, coaxialement à l'axe central Z. Le pion 41 présente la forme d'une tige centrale cylindrique qui s'étend sur sensiblement toute la longueur de la chambre de réchauffage 4 et qui délimite la paroi radialement intérieure du conduit hélicoïdal 40.

Une aile 42 s'étend dans le sens de sa largeur entre le pion 41 et la paroi interne cylindrique 2c du corps 2 selon une direction radiale par rapport à l'axe central Z. L'aile 42 s'étend longitudinalement selon une hélice sur la majeure partie du pion 41. La face 43 de l'aile 42 orientée vers le haut, délimite la paroi longitudinale inférieure du conduit 40, tandis que la paroi opposée 44, orientée vers le bas, de l'aile 42 délimite la paroi longitudinale supérieure du conduit 40. Le diamètre du pion 41 et l'épaisseur de l'aile 42 sont choisis de manière à ce que le conduit hélicoïdal 40 occupe la majeure partie du volume défini par la paroi cylindrique interne 2c de la portion inférieure du corps 2.

Dans le premier mode de réalisation préféré et représenté à la figure 1, l'aile hélicoïdale 42 présente une embase 45 venue de matière avec le pion 41, et un bord radialement extérieur 46, opposé à l'embase 45, qui est libre. Ainsi, le pion 41 peut être moulé au moyen d'un moule comprenant deux demi coquilles qui sont déplacées l'une par rapport à l'autre selon une direction radiale.

Afin d'assurer l'étanchéité entre le bord libre 46 de l'aile 42 et la paroi interne 2c du corps 2, un moyen d'étanchéité 48 est prévu sur le bord libre 46 de l'aile. Dans le mode de réalisation représenté à la figure 1, il s'agit d'un boudin en élastomère directement surmoulé sur l'extrémité libre 46 de l'aile 42, et légèrement comprimé contre la paroi cylindrique interne 2c. On notera que le pion 41 et le corps 2 sont en plastique relativement rigide, et que la rigidité de la portion inférieure du corps 2 peut être renforcée par la présence d'une bague extérieure métallique 47. Toutefois, la présence de matière plastique permet de limiter les déperditions de chaleur du dispositif 1.

Dans le deuxième mode de réalisation représenté aux figures 2 et 3, c'est le bord radialement extérieur de l'aile hélicoïdale 42 qui forme une embase 45 venue de matière avec la portion inférieure du corps 2, tandis que l'extrémité libre 46 de l'aile 42 vient en contact avec le pion cylindrique 41, pour délimiter le conduit hélicoïdal 40 de la chambre de réchauffage 4. La portion inférieure du corps 2 comprenant l'aile hélicoïdale 42 peut être réalisée par injection dans un moule comprenant un insert retiré selon un mouvement hélicoïdal.

Pour ce deuxième mode de réalisation, la portion inférieure du corps 2 est de préférence réalisée en une matière plastique qui est élastiquement déformable, ce qui permet d'obtenir un contact relativement étanche entre l'extrémité libre 46 de l'aile 42 et le pion central 41. On notera que dans ce deuxième mode de réalisation, la portion inférieure du corps 2, représentée à la figure 3, forme une pièce indépendante de la portion supérieure du corps 2, qui sont fixées l'une à l'autre par serrage élastique de la portion inférieure sur la portion supérieure du corps 2.

Dans les deux modes de réalisation représentés, le pion 41 présente une extrémité inférieure élargie 49 dont le diamètre extérieur correspond sensiblement au diamètre extérieur du corps 2. Cette extrémité inférieure 49 du pion 41 forme un bouchon qui ferme la chambre de réchauffage 4. L'espace intérieur délimité par la paroi 2c du corps 2 est ainsi démoulable selon l'axe central Z.

On notera que le pion 41 est monté amovible dans le corps 2, ce qui facilite le nettoyage de la chambre de réchauffage 4. Dans le premier mode de réalisation, figure 1, le bouchon 49 comporte un joint torique 50 qui assure à la fois l'étanchéité et le maintien du pion 41 dans le corps 2.

Dans le deuxième mode de réalisation, figures 2 et 3, le maintien du pion 41 est assuré par un rebord interne 51 formé à l'extrémité inférieure du corps 2, qui enserre élastiquement l'extrémité inférieure élargie 49 du pion 41.

Dans les deux modes de réalisation, l'orifice de sortie 7 est agencé au centre du bouchon 49 intégralement formé avec le pion 41, et coaxialement à l'axe central Z, ce qui facilite la récupération de la mousse de lait ou du lait chaud dans une tasse à café.

L'orifice de sortie 7 est en communication avec l'extrémité inférieure 4b du conduit 40 de la chambre de réchauffage 4 par un ou plusieurs canaux 52.

Le dispositif de réchauffage 1 est monté sur une machine à café de type expresso 55, qui comprend de manière connue un générateur de vapeur 56 auquel est reliée la première extrémité d'un tube 57. Le tube 57 présente une deuxième extrémité formant une sortie de vapeur sur laquelle est monté le dispositif 1. Ce montage peut être permanent ou amovible pour former, dans ce dernier cas, un accessoire de la machine à café 55.

Pour produire du lait chaud ou une émulsion de lait, selon la position de l'organe de commande d'air 25, l'utilisateur plonge l'extrémité du tube souple 20 dans un récipient contenant du lait et commande la production et/ou la sortie de vapeur. La vapeur injectée dans la chambre d'aspiration 3 par le conduit d'injection de vapeur 10 crée une dépression qui entraîne une aspiration de lait, et éventuellement d'air. Du fait de la force de la vapeur et de la disposition de la chambre de réchauffage 4 sous la chambre d'aspiration 3, le mélange formé dans la chambre d'aspiration 3 s'écoule vers la chambre de réchauffage 4 par l'orifice 5. Le mélange de lait, de vapeur et éventuellement d'air, s'écoule à travers le conduit 40 de la chambre de réchauffage 4 à une vitesse inférieure à celle obtenue à travers la sortie 5 et selon une trajectoire hélicoïdale dont la longueur effective est nettement supérieure à la hauteur, mesurée selon l'axe central Z, de la chambre de réchauffage 4. Le mélange s'écoule ensuite à travers le canal 52 vers l'orifice de sortie 7.

## Revendications

1. Dispositif de réchauffage de lait comprenant un corps (2) comportant :
- un conduit d'injection de vapeur (10) débouchant dans une chambre d'aspiration (3) et destiné à être connecté à une source de vapeur ;
- un conduit de lait (15) en communication avec la chambre d'aspiration (3) et destiné à être relié à un récipient contenant du lait ; et
- une chambre de réchauffage (4) s'étendant depuis une sortie (5) de la chambre d'aspiration (3) jusqu'à un orifice de sortie (7) par lequel le lait réchauffé peut s'écouler en dehors dudit corps (2),
le corps (2) s'étend selon un axe central (Z) et comporte une extrémité supérieure (2a) dans laquelle débouche le conduit d'injection de vapeur (10), et une extrémité inférieure (2b) dans laquelle débouche l'orifice de sortie (7), ledit corps (2) présentant une portion supérieure dans laquelle est agencée la chambre d'aspiration (3) et une portion inférieure dans laquelle est agencée la chambre de réchauffage (4),
**caractérisé en ce que** la chambre de réchauffage (4) comporte un conduit interne (40) ayant la forme d'une hélice régulière s'étendant selon l'axe central (Z) sur au moins deux spires.

2. Dispositif selon la revendication 1, dans lequel la portion inférieure du corps (2) présente une paroi interne (2c) globalement cylindrique, et dans lequel le conduit (40) de la chambre de réchauffage (4) est délimité par la paroi interne (2c) du corps, un pion central (41) et une aile hélicoïdale (42) s'étendant entre ladite paroi interne (2c) et ledit pion (41), et est en communication avec l'orifice de sortie (7).

3. Dispositif selon la revendication 2, dans lequel l'aile hélicoïdale (42) présente une embase (45) venue de matière avec le pion (41), et un bord radial libre (46) opposé à ladite embase et pourvu d'un moyen d'étanchéité (48).

4. Dispositif selon la revendication 2 ou 3, dans lequel le pion (41) est monté amovible dans le corps (2).

5. Dispositif selon l'une quelconque des revendications 2 à 4, dans lequel le pion (41) présente une extrémité élargie (49) qui forme l'extrémité inférieure (2b) du corps (2) et dans laquelle l'orifice de sortie (7) est agencé coaxialement à l'axe central (Z).

6. Dispositif selon l'une quelconque des revendications 2 à 5, dans lequel les extrémités supérieure (2a) et inférieure (2b) du corps (2) sont constituées respectivement par deux bouchons amovibles (11 ; 49) dont l'un (11) comporte le conduit d'injection de vapeur (10), et dont l'autre (49) porte le pion (41) et l'aile hélicoïdale (42).

7. Dispositif selon l'une quelconque des revendications précédentes, dans lequel un conduit d'air (16) en communication avec la chambre d'aspiration (3) est prévu pour aspirer de l'air ambiant, ledit conduit d'air (16) étant sélectivement obturable par un organe de commande d'air (25).

8. Machine à café du type expresso (55) comprenant un générateur de vapeur (56) et un tube (57) présentant une première extrémité reliée au générateur de vapeur (56) et une deuxième extrémité formant une sortie de vapeur, **caractérisée en ce qu'**un dispositif de réchauffage de lait (1) selon l'une quelconque des revendications 1 à 7 est agencé à la deuxième extrémité du tube (57) de sortie de vapeur.

## Claims

1. Device for.heating milk, comprising a body (2) having:
- a steam injection pipe (10) emerging in a suction chamber (3) and intended to be connected to a source of steam;
- a milk pipe (15) in communication with the suction chamber (3) and intended to be connected to a receptacle containing milk; and
- a heating chamber (4) extending from an outlet (5) of the suction chamber (3) as far as an outlet orifice (7) through which the heated milk can flow out of the said body (2), the body (2) extends along a central axis (Z) and comprises a top end (2a) in which the steam injection pipe (10) emerges, and a bottom end (2b) in which the outlet orifice (7) emerges, the said body (2) having a top portion in which the suction chamber (3) is arranged and a bottom portion in which the heating chamber (4) is arranged, **characterised in that** the heating chamber (4) comprises an internal pipe (40) having the form of a regular helix extending along the central axis (Z) over at least two turns.

2. Device according to claim 1, in which the bottom portion of the body (2) has a roughly cylindrical internal wall (2c) and in which the pipe (40) of the heating chamber (4) is delimited by the internal wall (2c) of the body, a central pin (41) and a helical wing (42) extending between the said internal wall (2c) and the said pin (41), and is in communication with the outlet orifice (7).

3. Device according to claim 2, in which the helical wing (42) has a base (45) made in one piece with the pin (42), and a free radial edge (46) opposite to the said base and provided with sealing means (48).

4. Device according to claim 2 or 3, in which the pin (41) is mounted removably in the body (2).

5. Device according to any one of claims 2 to 4, in which the pin (41) has a broadened end (49) that forms the bottom end (2b) of the body (2) and in which the outlet orifice (7) is arranged coaxially with the central axis (Z).

6. Device according to any one of claims 2 to 5, in which the top (2a) and bottom (2b) ends of the body (2) are formed respectively by two removable plugs (11; 49), one (11) of which comprises the steam injection pipe (10) and the other (49) of which carries the pin (41) and the helical wing (42).

7. Device according to any one of the preceding claims, in which an air pipe (16) in communication with the suction chamber (3) is provided for sucking ambient air, the said air pipe (16) being selectively closable by an air control member (25).

8. Coffee machine of the espresso type (55) comprising a steam generator (56) and a tube (57) having a first end connected to the steam generator (56) and a second end forming a steam outlet, **characterised in that** a milk heating device (1) according to any one of claims 1 to 7 is arranged at the second end of the steam outlet tube (57).

## Patentansprüche

1. Vorrichtung zum Vorwärmen von Milch, die einen Körper (2) aufweist, welcher umfasst:
eine Dampfeinspritzleitung (10), die in einer Ansaugkammer (3) mündet und zur Verbindung mit einer Dampfquelle bestimmt ist;
eine Milchleitung (15) in Verbindung mit der Ansaugkammer (3), die zur Verbindung mit einem die Milch enthaltenden Gefäß bestimmt ist; und
eine Vorwärmkammer (4), die sich von einem Ausgang (5) der Ansaugkammer (3) bis zu einer Ausgangsöffnung (7), durch welche die vorgewärmte Milch aus dem Körper (2) ausströmen kann, erstreckt, wobei der Körper (2) sich entlang einer zentralen Achse (Z) erstreckt und ein oberes Ende (2a) aufweist, in dem die Dampfeinspritzleitung (10) mündet, sowie ein unteres Ende (2), in dem die Ausgangsöffnung (7) mündet, wobei der Körper (2) einen oberen Teil aufweist, in dem die Ansaugkammer (3) angebracht ist, sowie einen unteren Teil, in dem die Vorwärmkammer (4) angeordnet ist, **dadurch gekennzeichnet, dass** die Vorwärmkammer (4) eine interne Leitung (40) aufweist, welche die Form einer regelmäßigen Schraubenlinie hat, die sich entlang der zentralen Achse (Z) um wenigstens zwei Windungen erstreckt.

2. Vorrichtung nach Anspruch 1, wobei der untere Teil des Körpers (2) eine im Wesentlichen zylindrische Innenwand (2c) aufweist und wobei die Leitung (40) der Vorwärmkammer (4) durch die Innenwand (2c) des Körpers, einen zentralen Stift (41) und einen schraubenförmigen Flügel (42), der sich zwischen der Innenwand (2c) und dem Stift (41) erstreckt, begrenzt und mit der Ausgangsöffnung (7) in Verbindung ist.

3. Vorrichtung nach Anspruch 2, wobei der schraubenförmige Flügel (42) einen Sockel (45) aufweist, der mit dem Stift (41) aus einem Material ist, sowie einen freien radialen Rand (46), welcher dem Sockel gegenüber liegt und mit einem Dichtungsmittel (48) versehen ist.

4. Vorrichtung nach Anspruch 2 oder 3, wobei der Stift (41) in dem Körper (2) lösbar montiert ist.

5. Vorrichtung nach einem der Ansprüche 2 bis 4, wobei der Stift (41) ein verbreitertes Ende (49) aufweist, welches das untere Ende (2b) des Körpers (2) bildet und in dem die Ausgangsöffnung (7) koaxial zur zentralen Achse (Z) angeordnet ist.

6. Vorrichtung nach einem der Ansprüche 2 bis 5, wobei das obere Ende (2a) und das untere Ende (2b) des Körpers (2) jeweils durch zwei lösbare Stöpsel (11; 49) gebildet sind, von denen einer (11) die Dampfeinspritzleitung (10) und der andere (49) den Stift (41) und den schraubenförmigen Flügel (42) trägt.

7. Vorrichtung nach einem der vorangehenden Ansprüche, wobei eine Luftleitung (16) in Verbindung mit der Ansaugkammer (3) vorgesehen ist, um Umgebungsluft anzusaugen, wobei die Luftleitung (16) durch ein Luftsteuerelement selektiv verschließbar ist.

8. Espressomaschine (55) mit einem Dampferzeuger (56) und einem Rohr (57), das ein erstes mit dem Dampferzeuger (56) verbundenes Ende und ein zweites einen Dampfausgang bildendes Ende aufweist, **dadurch gekennzeichnet, dass** eine Vorrichtung zum Vorwärmen von Milch (1) nach einem der Ansprüche 1 bis 7 an dem zweiten den Dampfausgang bildenden Ende des Rohres (57) angeordnet ist.
